# EUROPEAN PATENT SPECIFICATION

(11) **EP 0 878 876 B1**
(45) Date of publication and mention of the grant of the patent: **23.10.2002**
(21) Application number: 98201554.7
(22) Date of filing: 12.05.1998
(51) Int. Cl.: H01R 31/06, H01R 13/74, H02B 1/21, H02B 1/052

(54) **Adapter for the modular connection of electrical devices to a bar-based electricity distribution system**
Adapter zur modularen Verbindung elektrischer Geräte zu einem elektrischen Verteilungssystem auf Basis von Schiene
Adaptateur de raccordement modulaire des appareils électriques pour un système de distribution d'électricité à base de barre

(30) Priority: 16.05.1997 IT MI971154
(43) Date of publication of application: 18.11.1998
(73) Proprietor: ABB Sace SpA, 20137 Milano (IT)
(72) Inventor: Fontana, Rodolfo, 21050 Clivio, (VA) (IT)
(74) Representative: Giavarini, Francesco

(56) References cited:
- EP-A- 0 753 916
- EP-A- 0 762 581
- DE-A- 19 515 923
- US-A- 4 916 574
- US-A- 5 394 296

## Description

The invention concerns an adapter for the modular connection of electrical devices, such as line protection circuit-breakers for example, to a multiple pole bar-based electricity distribution system, usually installed inside electrical cabinets or switchboards. The adapter features a damping device for the electrical connection to one of the bars and a conductor, which forms an integral part of the clamping device, for the electrical connection of the device.

There are known electrical distribution devices for connecting a multiplicity of devices to a single power supply point, such as a contactor for example.

These devices include bars of conductive material connected to the different electrical phases of the power supply network, to which components are fixed in different points for the electrical connection of the devices.

At present, the electrical connection of the devices is also made using adapters featuring means on one side for supporting the electrical devices and hooks on the other side for the electrical and mechanical connection to the distribution bar system.

Being held in place mechanically by the bars only, the current adapters must be fitted with a safety device that prevents the accidental release of the bars caused by abnormal stress, such as impacts to the housing of the device or electrodynamic stress caused by short circuits.

These safety devices make the current adapters complex and complicated to use. These adapters in fact feature hooks for anchoring them to the bars, the openings of which must be closed once the bars have been inserted to prevent their accidental release. The means for closing the openings of the hooks take the form of sliding components inside the adapter that have a complex shape in order to be easy to use.

As a result, the operations for connecting the adapter to the bars are complicated. One has to insert the adapter, fit the bars in the hooks and then close the openings of the hooks correctly.

In addition, since the adapter supporting the device is held in place by the bar system only, any electrodynamic forces applied to the bars and the device as well as its weight and any forces caused by accidental impacts are transmitted in their entirety to the bar system. This makes it necessary for the bar system to be oversized in relation to that which would be required for the role of electricity distribution only.

An example of an adapter of known type is described in the European patent application EP0753916 which discloses a bus bar adapter system having a trough-shaped lower part with holding elements for conductors, and an upper part partially covering the lower part with fixing elements for switching devices on its side remote from the lower part; further, the upper parts has clamping devices, i.e. contacts for the corresponding conductors.

The object of the present invention is to overcome the drawbacks of the prior art of the technique and in particular to increase the speed and ease of the electrical connection of the device to the bar-based electricity distribution system as well as to make the electrical connection independent of the characteristics of the electrical device, such as, for example, its dimensions, and therefore to make it modular.

A further object of the invention is to prevent the various different stresses applied to the adapter from being borne entirely by the bar-based electricity distribution system.

The object is achieved thanks to an adapter for the modular connection of electrical devices to a bar-based electricity distribution system, featuring a clamping device for the electrical connection to one of the bars and a conductor, forming an integral part of the clamping device, for the electrical connection of the device, the clamping device being located on the side of the adapter facing the bars with the connection axis aligned with the axis of the bar of the corresponding pole, characterised by the fact that the side of the adapter opposite the clamping device features a slider supporting the electrical device that is geometrically coupled to the body of the adapter and able to slide in relation to the adapter to permit the insertion and withdrawal of the end of the contact of the conductor in the electrical device and by the fact that the opposite edges of the adapter feature flanges for connection to a supporting structure.

Document DE-A-195 15 923, on which the preamble of claim 1 is based, discloses an adapter for mounting electrical devices featuring a slider for achieving contact between the electrical devices. Document EP-A-0 762 581 discloses an adapter featuring a similar slider. In order to facilitate and speed up the connection of the adapter to the supporting structure and therefore to the bar-based distribution system, the adapter features flexible flanges on its opposite edges for click fitting to the supporting structure.

In order to provide the appropriate electrical insulation between the different parts of the adapter, the body of the adapter is made of an insulating material.

In order to be able to house the clamping device for the connection to the distribution bars and the conductor for the electrical connection of the device within the adapter, the adapter is formed from half-shells taking the form of a base and a cover.

In order to support and fix the electrical connection components inside the adapter and guide the sliding of the slider, the inside of the adapter body features reinforcing ribs delimiting channels that form the support and fixing seatings for the clamping device and the electrical connection conductor and reinforcing ribs delimiting a slideway that receives the slider in a geometrical coupling.

In order to support electrical devices designed for click fitting on rails, the slider features a rail for the click fitting of the device on the side facing the electrical device.

In order to provide partial stop positions in the slideway for the slide, corresponding to the positions for fitting the electrical device on the adapter and for connecting the device to the electrical conductor, the slideway for the slide provided in the body of the adapter features a projection in which notches in the corresponding side of the flexibly deformable slide engage selectively, clicking into place. In order to connect the adapter geometrically to the electricity distribution bars, the side of the adapter facing the distribution bars features grooves that form transverse seatings to receive the bars in a geometrical connection.

In order to provide the electrical connection concomitantly with the transverse seatings for the bars, the clamping device is located inside the body of the adapter and to the side of the groove forming the seating for the electricity distribution bar.

In order to facilitate the electrical connection of the adapter to the device, the channels inside the adapter body feature openings on the side opposite the clamping device close to the electrical device. In order to connect the device electrically to the clamping device for the connection to the distribution bars, the body of the adapter contains a small conductive bar that is electrically connected at one end to the back of the clamping device and partially projects from the body of the adapter at its other end for the electrical connection to a device.

In order to prevent accidental contact with the part of the small conductive bar that projects from the adapter, the conductor for the electrical connection of the device to the clamping device is covered with an insulating film leaving the ends of the electrical contact free.

The main advantages of the invention reside in the fact that the connection of the electrical device to the distribution bars using the interposition of the adapter that is the subject of the invention is particularly simple and rapid. Indeed, one linear movement is all that is required to insert the adapter frontally in the bar system, simultaneously click fitting it to a supporting structure.

A significant advantage derives from the fact that the electrical device can be fitted to the adapter either before or after the adapter has been fitted on the electricity distribution bars and can be electrically connected to the conductor either from above or below.

A further advantage resides in the fact that the device is electrically connected to the bar system but supported by the structure of the container. In this way any electrodynamic stress as well as any stress produced by impacts and the weight of the adapter supporting the device are transmitted to the stronger structure of the container.

The object designed as in the present invention is described in greater detail hereinafter and illustrated using one embodiment that is put forward solely by way of example in the annexed drawings in which:

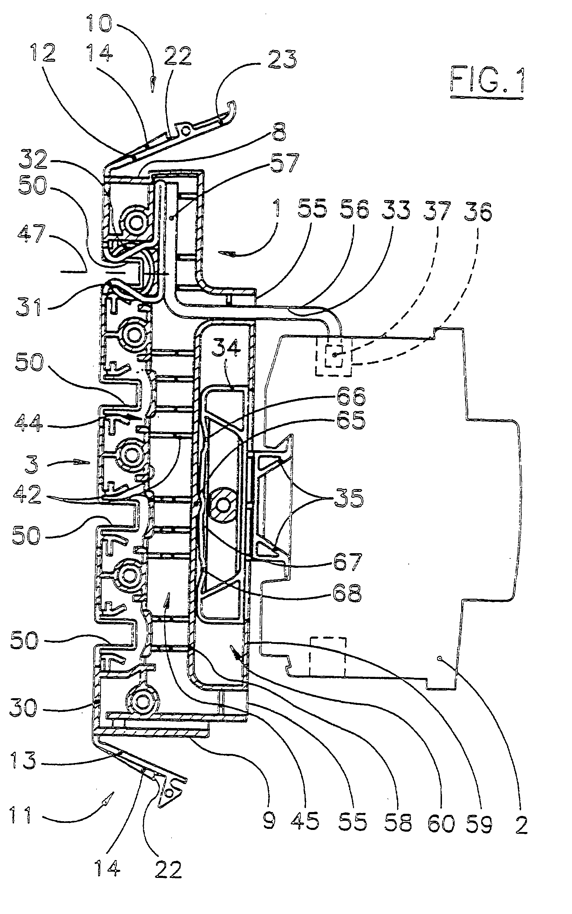

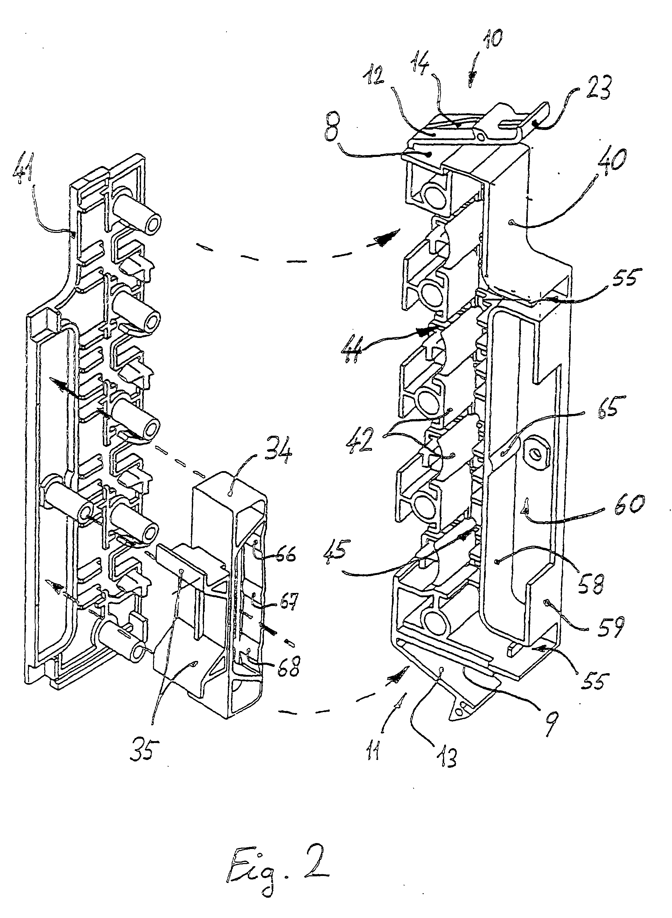

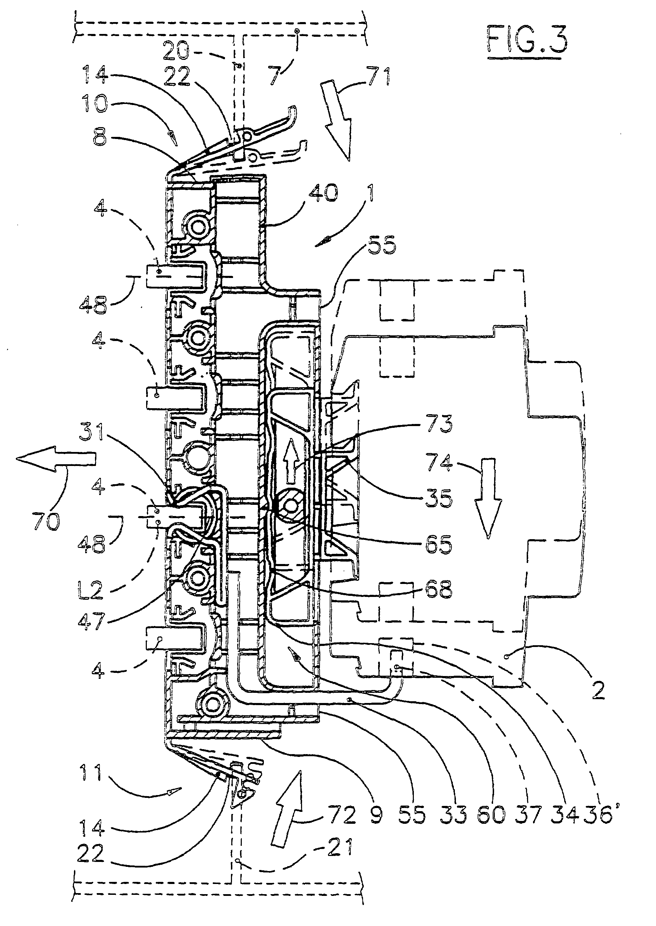

Figure 1 shows a cutaway side view of an adapter supporting an electrical device for the connection to a first distribution bar; Figure 2 shows an exploded axonometric view of the half-shells forming the body of the adapter and the slider for supporting the electrical device; Figure 3 shows a side view of the different positions reached by the base of the adapter and the device during the phases for connecting the adapter to a supporting structure and to a bar-based electricity distribution system. The figures allow one to identify an adapter, indicated overall by 1, supporting an electrical device 2.

The adapter 1 features a side 3 designed for connection to an electricity distribution bar system 4 (Figure 3) as described in greater detail hereinafter.

The adapter 1 is fixed at the top and at the bottom to the structure 7 of a container for electrical devices, such as for example a cabinet or switchboard (Figure 3).

Flanges 10, 11 for fixing the adapter to the structure 7 extend from the opposite edges 8, 9 of the adapter 1.

Flanges 10, 11 are preferably formed by flexible strips 12, 13 fixed at one end to the edge 8, 9 of the adapter 1.

The strips 12, 13 slant towards the part opposite side 3 of the adapter I for connecting to the bar system 4.

The strips 12, 13 feature longitudinal reinforcing ribs 14.

The height of the reinforcing ribs 14 decreases towards the end where the strips 12, 13 are fixed, forming a slideway to guide and centre the connection of the adapter 1 to the supporting walls 20, 21 provided in the structure 7 of the container (Figure 3).

The reinforcing ribs 14 feature a transverse groove 22 that forms a seating for the click fitting of flanges 10, 11 which are flexible in relation to walls 20, 21.

The upper flange 10 features an extension 23 on the its free end that forms a lever for releasing from the wall 20.

The adapter 1 features a supporting body 30, as described in detail hereinafter, a known conducting clamping device 31 loaded by a spiral spring 32 and a conductor 33, which at one end forms an integral part of the clamping device 31, for the electrical connection of the device 2 to the corresponding electricity distribution bar 4.

The slider 34 features side extensions 35 that project from the body 30 of the adapter 1 for supporting and fixing the electrical device 2.

The slider 34 can slide in relation to the body 30 of the adapter 1. The slider 34 can reach a position in which the device 2 supported receives the contact end 37 of the conductor 33 in its electrical connection seating 36, and a position in which the device 2 is electrically disconnected from the conductor 33 and is free to be disconnected from the extensions 35 for supporting and fixing the slider 34 (Figure 3).

The body 30 of the adapter 1 is preferably formed from two half-shells forming a base 40, which receives the clamping device 31, the conductor 33 and the slider 34, as well as a cover 41 (Figure 2).

The base 40 and the cover 41 are advantageously made of an insulating material.

The base 40 and the cover 41 feature geometrically coupling projections and seatings to guide the closure of the half-shells.

The coupling projections of the cover 41 and of the base 40 preferably receive the fixing means for the half-shells, which may for example be bolts (not illustrated).

The body 30 of the adapter 1 features internal reinforcing ribs 42 that delimit the channels forming the seatings 44, 45.

The reinforcing ribs 42 position the clamping device 31 in such a way that the axis 47 of its clamping motion is aligned with the axis 48 of the bar 4 that needs to be electrically connected to the device 2 (Figure 1 and 3).

In a preferred embodiment, the body 30 features grooves 50 that are parallel to one another on the side facing the distribution bars 4.

The grooves 50 form seatings for receiving the distribution bars 4 in a geometric connection.

The grooves 50 are open on the sides facing the inside of the body 30, forming the rear openings of the channels forming the seatings 44 from which the clamping device 31 clamps the distribution bar 4 for the electrical connection of the device 2.

The openings 55 bring the channel forming the seating 45 of the conductor 33 into communication with the outside of the adapter 1.

The openings 55 are preferably located in the top and bottom of the device 2 to enable easy electrical connection.

In an advantageous embodiment of the invention, a small bar forms the conductor 33 for the electrical connection of the device 2.

The conductor 33 is covered by an insulating film 56 with the exception of the contact ends 37 and 57. The insulating film 56 is advantageously in different colours to suit the pole of the bar 4 that it is intended to connect to the electrical device 2. One contact end 57 is fixed to the back of the clamping device 31 by welding for example. The other contact end 37 projects from the adapter 1 in order to be received in the electrical connection seating 36 of the device 2.

The body 30 of the adapter 1 features further reinforcing ribs 58 inside it that delimit, with the side walls 59 of the body 30, a slideway 60 for the slider 34.

The side wall 59 delimiting the slideway 60 features a slot-shaped opening 61 from which the extensions 35 for supporting and fixing the slider project.

The slideway 60 for the slider 34 is preferably located between the openings 55 of the seating 45 that receives the conductor 33. The slideway 60 is advantageously orientated parallel to the electrical contact end 37 of the conductor 33.

The reinforcing ribs 58 feature a projection 65 on the side facing the slideway 60

The projection 65 is advantageously located centrally and transversely in relation to the slideway 60.

The slider 34, lodged in the slideway 60, features a flexible side that is contiguous with the projection 65. The flexible side of the slider 34 features notches 66, 67, 68 which can be selectively engaged so that projection 65 clicks into them, defining the positions of the slider that bring the supported device 2 into a position in which it is connected to or disconnected from the contact end 37 of the conductor 33, irrespective of whether the conductor 33 projects from the body 30 of the adapter 1 through the top or bottom opening 55. The connection of an electrical device to one of the poles of the bar-based electricity distribution system is described hereinafter by way of example with the aid of Figure 3.

If one wants to connect the device 2 electrically to the bar 4 marked for the pole L2, it will be necessary to use an adapter 1 featuring the clamping device 31 aligned with the chosen bar L2.

The operations for connecting the adapter 1 to the supporting structure 7 and to the electricity distribution system bars 4 and then for connecting the electrical device 2 to the adapter 1 are described in order below.

One can, alternatively, proceed to connect the electrical device 2 to the adapter 1 and then connect the adapter 1 supporting the device 2 to the structure 7 as well as to the electricity distribution system bars 4.

Having positioned the adapter 1 frontally in relation to the electricity distribution system bars 4, the adapter 1 can be connected to the bars 4 with a linear movement (in the direction of the arrow 70).

The operation is facilitated by the slideway-forming reinforcing ribs 14 present on the flexible click-connection flanges 10, 11. The flexible flanges 10, 11 rest against the walls 20, 21, guiding and centring the adapter 1 in relation to the electricity distribution system bars 4 in their idle position, being opened up out before connecting to the structure 7 (continuous line).

Pressing on the adapter (in the direction of the arrow 70) flexes the flexible flanges 10 and 11 (in the direction of the arrows 71), causing them to move (dotted line) to receive the walls 20, 21 with a click fit in the seatings 22.

In this position, the adapter forms an integral part of the supporting structure 7 and is electrically connected to the distribution system bars 4.

If one wants to connect the device 2 electrically to the bar L2 using the lower electrical connection seating 36' the conductor 33 must be located so that it projects from the adapter 1 from the lower opening 55.

Subsequently acting on the extensions 35 of the slider 34 (in the direction of the arrow 73) raises the slider 34, making it slide in the slideway 60 of the adapter 1 until the lower notch 68 in the flexible side engages with a click over the projection 65 of the slideway 60.

With the slider 34 in the raised position it is possible to connect and fix the device 2 to the side extensions 35 without the device 2 interfering with the conductor 33.

Acting (in the direction of the arrow 74) on the device 2 which forms an integral part of the slider 34, lowers the slider 34 bringing it back down to its central position. During this operation the electrical connection seating 36 of the device 2 receives the contact end 37 of the conductor 33.

It is therefore sufficient to act on the tightening means (not illustrated) of the electrical connection located in the seating 36 to fix the conductor 33 to the device 2 and bring the electrical device 2 into operation.

## Claims

1. Adapter (1) for the modular connection of electrical devices (2) to the bars (4) of a bar-based electricity distribution system, featuring a clamping device (31) for the electrical connection to the bars (4) and a conductor (33) for the electrical connection of the device (2), the clamping device (31) being located on the side (3) of the adapter (1) facing the bars (4) with the connection axis (47) aligned with the axis (48) of one bar (4) for the corresponding pole, the side of the adapter (1) opposite the clamping device (31) featuring a slider (34) supporting the electrical device (2) that is geometrically connected to the body (30) of the adapter (1) **characterised by** the fact that the conductor (33) forms an integral part of the clamping device (31), and the slider (34) is able to slide in relation to the body (30) of the adapter (1) to permit the insertion and withdrawal of the end (37) of the contact of the conductor (33) in the electrical device (2) and by the fact that the opposite edges (8, 9) of the adapter (1) feature flanges (10, 11) for connection to a supporting structure (7).

2. Adapter (1), as in claim 1, **characterised by** the fact that it features flexible flanges (10, 11) for click-fit fixing to the supporting structure (7).

3. Adapter (1), as in claim 1, **characterised by** the fact that the body (30) of the adapter (1) is made of an insulating material.

4. Adapter (1), as in claim 1, **characterised by** the fact that the body (30) of the adapter (1) is formed from two half-shells forming a base (40) and a cover (41).

5. Adapter (1) as in claim 1, **characterised by** the fact that the body (30) of the adapter (1) features internal reinforcing ribs (42) delimiting channels forming the supporting and fixing seatings (44, 45) for the clamping device (31) and the electrical connection conductor (33) and reinforcing ribs (58) delimiting a slideway (60) for receiving the slider (34) in a geometrical coupling.

6. Adapter (1), as in claim 1, **characterised by** the fact that the side of the slider (34) facing the device (2) features a rail for the click-fit fixing of the device (2).

7. Adapter (1) as in claim 5, **characterised by** the fact that the slideway (60) for the slider (34) in the body (30) of the adapter (1) features a projection (65) in which the notches (66, 67, 68) in a corresponding flexible side of the slider (34) selectively engage, clicking into place.

8. Adapter (1), as in claim 1, **characterised by** the fact that the adapter (1) features grooves (50) in the side (3) facing the distribution bars (4) that form transverse seatings to receive the bars (4) in a geometrical connection.

9. Adapter (1), as in claim 8 **characterised by** the fact that the clamping device (31) is located inside the body (30) of the adapter (1) and to the side of the groove (50) forming the seating for the electricity distribution bar.

10. Adapter (1), as in claim 5, **characterised by** the fact that the channels inside the body (30) of the adapter (1) feature openings (55) on the side opposite the clamping device (31) close to the electrical device (2).

11. Adapter (1), as in claim 1, **characterised by** the fact that the body (30) of the adapter (1) contains a small conductive bar that is electrically connected at one end (57) to the back of the clamping device (31) and partially projects from the body of the adapter (1) at its other end (37) for the electrical connection to a device (2).

12. Adapter (1), as in claim 1, **characterised by** the fact that the conductor (33) for the electrical connection of the device (2) to the clamping device (31) is covered with an insulating film (56) leaving the ends (57, 37) of the electrical contact free.

## Patentansprüche

1. Adapter (1) für den modularen Anschluß von elektrischen Vorrichtungen (2) an die Schienen (4) eines Elektrizitäts-Schienenverteilersystems, der eine Klemmvorrichtung (31) für den elektrischen Anschluß an die Schienen (4) und einen Leiter (33) für den elektrischen Anschluß an die Vorrichtung (2) aufweist, wobei die Klemmvorrichtung (31) auf der den Schienen (4) zugewandten Seite (3) des Adapters (1) so angeordnet ist, daß die Anschlußachse (47) mit der Achse (48) einer für den entsprechenden Pol bestimmten Schiene (4) fluchtet, und die der Klemmvorrichtung (31) abgewandte Seite des Adapters (1) einen Schieber (34) aufweist, der die formrichtig an den Körper (30) des Adapters (1) angeschlossene elektrische Vorrichtung (2) hält, **dadurch gekennzeichnet, daß** der Leiter (33) einen integralen Teil der Klemmvorrichtung (31) bildet und der Schieber (34) relativ zum Körper (30) des Adapters (1) gleiten kann und so das Einsetzen des Endes (37) des Kontaktes des Leiters (33) in die elektrische Vorrichtung (2) und dessen Herausziehen ermöglicht, und daß die entgegengesetzten Kanten (8, 9) des Adapters (1) Flansche (10, 11) für den Anschluß an eine Haltekonstruktion (7) aufweisen.

2. Adapter (1) nach Anspruch 1, **dadurch gekennzeichnet, daß** er flexible Flansche (10, 11) zur einrastenden Befestigung an der Haltekonstruktion (7) aufweist.

3. Adapter (1) nach Anspruch 1, **dadurch gekennzeichnet, daß** der Körper (30) des Adapters (1) aus einem isolierenden Material besteht.

4. Adapter (1) nach Anspruch 1, **dadurch gekennzeichnet, daß** der Körper (30) des Adapters (1) von zwei Halbschalen in Form einer Basis (40) und einer Abdeckung (41) gebildet ist.

5. Adapter nach Anspruch 1, **dadurch gekennzeichnet, daß** der Körper (30) des Adapters (1) innere Verstärkungsrippen (42) aufweist, die Kanäle begrenzen, welche die Halte- und Befestigungssitze (44, 45) für die Klemmvorrichtung (31) und den für den elektrischen Anschluß vorgesehenen Leiter (33) bilden, sowie Verstärkungsrippen (58) aufweist, der eine Gleitbahn (60) begrenzt, um den Schieber (34) in formrichtiger Kopplung aufzunehmen.

6. Adapter (1) nach Anspruch 1, **dadurch gekennzeichnet, daß** die der Vorrichtung (2) zugewandte Seite des Schiebers (34) eine Schiene zur einrastenden Befestigung der Vorrichtung (2) aufweist.

7. Adapter (1) nach Anspruch 5, **dadurch gekennzeichnet, daß** die Gleitbahn (60) für den Schieber (34) in dem Körper (30) des Adapters (1) einen Vorsprung (65) aufweist, mit dem die in einer entsprechenden flexiblen Seite des Schiebers (34) ausgebildeten Kerben (66, 67, 68) wahlweise in Eingriff kommen, indem sie positioniert einrasten.

8. Adapter (1) nach Anspruch 1, **dadurch gekennzeichnet, daß** der Adapter (1) in der den Verteilerschienen (4) zugewandten Seite (3) Nuten (50) aufweist, die quer verlaufende Sitze bilden, um die Schienen (4) in formrichtigem Anschluß aufzunehmen.

9. Adapter (1) nach Anspruch 8, **dadurch gekennzeichnet, daß** die Klemmvorrichtung (31) im Inneren des Körpers (30) des Adapters (1) und zur Seite der den Sitz für die Elektrizitätsverteilerschiene bildenden Nut (50) hin angeordnet ist.

10. Adapter (1) nach Anspruch 5, **dadurch gekennzeichnet, daß** die Kanäle innerhalb des Körpers (30) des Adapters (1) auf der der Klemmvorrichtung (31) entgegengesetzten Seite nahe der elektrischen Vorrichtung (2) Öffnungen (55) aufweisen.

11. Adapter (1) nach Anspruch 1, **dadurch gekennzeichnet, daß** der Körper (30) des Adapters (1) eine kleine leitende Schiene enthält, die an ein Ende (57) der Rückseite der Klemmvorrichtung (31) elektrisch angeschlossen ist und an ihrem anderen Ende (37) für den elektrischen Anschluß an eine Vorrichtung (2) teilweise vom Körper des Adapters (1) übersteht.

12. Adapter (1) nach Anspruch 1, **dadurch gekennzeichnet, daß** der für den elektrischen Anschluß der Vorrichtung (2) an die Klemmvorrichtung (31) vorgesehene Leiter (33) unter Freilassen der Enden (57, 37) des elektrischen Kontaktes mit einem isolierenden Film (56) überzogen ist.

## Revendications

1. Adaptateur (1) de raccordement modulaire des appareils électriques (2) aux barres (4) d'un système de distribution d'électricité à base de barres, présentant un dispositif de serrage (31) pour la connexion électrique aux barres (4) et un conducteur (33) pour la connexion électrique du dispositif (2), le dispositif de serrage (31) étant situé sur la face (3) de l'adaptateur (1) en regard des barres (4), l'axe de connexion (47) étant aligné avec l'axe (48) d'une barre (4) pour le pôle correspondant, la face de l'adaptateur (1) en regard du dispositif de serrage (31) présentant un curseur (34) supportant le dispositif électrique (2) qui est accouplé de manière géométrique avec le corps (30) de l'adaptateur (1), **caractérisé par le fait que** le conducteur (33) fait partie intégrante du dispositif de serrage (31) et le curseur (34) est apte à coulisser par rapport au corps (30) de l'adaptateur (1) pour permettre l'insertion et la sortie de l'extrémité (37) du contact du conducteur (33) dans le dispositif électrique (2) et **par le fait que** les barres opposées (8, 9) de l'adaptateur (1) présentent des brides (10, 11) pour la connexion à une structure de support (7).

2. Adaptateur (1) selon la revendication 1, **caractérisé par le fait qu'**il présente des brides flexibles (10, 11) pour une fixation à encliquetage à la structure de support (7).

3. Adaptateur (1) selon la revendication 1, **caractérisé par le fait que** le corps (30) de l'adaptateur (1) est en matériau isolant.

4. Adaptateur (1) selon la revendication 1, **caractérisé par le fait que** le corps (30) de l'adaptateur (1) est constitué de deux demi-coques formant une base (40) et un couvercle (41).

5. Adaptateur (1) selon la revendication 1, **caractérisé par le fait que** le corps (30) de l'adaptateur (1) présente des nervures internes de renforcement (42) délimitant des canaux formant les structures de support et de fixation (44, 45) pour le dispositif de serrage (31) et le conducteur (33) de connexion électrique et des nervures de renforcement (58) délimitant une glissière (60) destinée à recevoir le curseur (34) selon un accouplement géométrique.

6. Adaptateur (1) selon la revendication 1, **caractérisé par le fait que** la face du curseur (34) en regard du dispositif (2) présente un rail pour la fixation à encliquetage du dispositif (2).

7. Adaptateur (1) selon la revendication 5, **caractérisé par le fait que** la glissière (60) pour le curseur (34) dans le corps (30) de l'adaptateur (1) présente une saillie (65) dans laquelle les encoches (66, 67, 68) présentes dans une face flexible correspondante du curseur (34) se mettent en place par encliquetage, de manière sélective.

8. Adaptateur (1) selon la revendication 1, **caractérisé par le fait que** l'adaptateur (1) présente des gorges (50) dans la face (3) en regard des barres de distribution (4) qui forment des sièges transversaux pour recevoir les barres (4) selon un accouplement géométrique.

9. Adaptateur (1) selon la revendication 8, **caractérisé par le fait que** le dispositif de serrage (31) est situé à l'intérieur du corps (30) de l'adaptateur (1) et sur le côté de la gorge (50) formant le siège pour la barre de distribution d'électricité.

10. Adaptateur (1) selon la revendication 5, **caractérisé par le fait que** les canaux à l'intérieur du corps (30) de l'adaptateur (1) présentent des ouvertures (55) du côté opposé au dispositif de serrage (31) près du dispositif électrique (2).

11. Adaptateur (1) selon la revendication 1, **caractérisé par le fait que** le corps (30) de l'adaptateur (1) contient une petite barre conductrice connectée électriquement, à une première extrémité (57), au dos du dispositif de serrage (31) et dépassant partiellement du corps de l'adaptateur (1), à son autre extrémité (37), pour la connexion électrique à un dispositif (2).

12. Adaptateur (1) selon la revendication 1, **caractérisé par le fait que** le conducteur (33) pour la connexion électrique du dispositif (2) au dispositif de serrage (31) est recouvert d'un film isolant (56) laissant libres les extrémités (57, 37) du contact électrique.
